# EUROPEAN PATENT APPLICATION

(11) **EP 0 552 902 A1**
(43) Date of publication of application: **28.07.1993**
(21) Application number: 93300291.7
(22) Date of filing: 18.01.1993
(51) Int. Cl.: A23N 15/00

(54) **Method and apparatus for cutting/trimming vegetables**

(30) Priority: 18.01.1992 GB 9201083
(71) Applicant: Rose, David, Boston, Lincolnshire PE20 3LB (GB)
(72) Inventor: Rose, David, Boston, Lincolnshire PE20 3LB (GB)
(74) Representative: Allen, Philippa Margaret

(57) **Abstract**

A machine for cutting/trimming vegetables, especially of the Brassica family, such as cauliflowers and similar vegetables, comprises a conveyor (10) arranged to carry the vegetables (20) in an inverted state. Cutters (35a, 35b) are positioned adjacent to the conveyor and simultaneously undergo a first reciprocating movement (54) parallel to the direction of movement of the conveyor and in synchronism with the movement of the vegetables thereon and a second movement towards and away from the vegetables. At the termination of the movement of the cutters into an inverted vegetable the cutters come into abutting engagement, thus completing a cut which severs the core from the florets in the case of a cauliflower. After the cutters are withdrawn, the cauliflower, with the core in situ, is then deposited on a discharge conveyor (28). The cutters are adjustable towards and away from the conveyor (10) in order to vary the depth of cut. Instead of cutters (35a, 35b) one can use an auger to drill cabbage cores, blades to cut a vegetable into halves or quarters, or a rotary cutter to trim the butt of a cabbage stalk. Different cutting/trimming means can be located in series along a conveyor, with control means to switch them into and out of use as desired.

## Description

This invention relates to apparatus for and methods of processing vegetables, especially members of the Brassica family, and is particularly concerned with the coring and/or floretting of cauliflowers and other similar vegetables, such as broccoli and calabrese. However, the invention is also concerned with the coring and the slicing of vegetables such as Dutch cabbage, and with the removal of the basal portion of the stalk of certain crops, such as cabbage. The invention will be described hereinafter primarily with reference to the processing of cauliflowers, but it is to be understood that it is applicable to other vegetables, as will become apparent hereinafter.

It is customary to pick cauliflowers by severing their stalks and leaving the flower surrounded by at least the innermost leaves, as these serve as a protection during transport and storage. Cauliflowers are commonly sold in this way. Since in general only the flowers and florets are eaten by humans, a cauliflower has to be separated from its leaves and then part or all of the relatively hard core is removed, when a cauliflower is being prepared for cooking. It is common practice to cut across the stalk between the leaves and the flower and then to separate the latter into halves or quarters and finally remove at least some part of the core. It is also essential to do this if it is intended to cook only the cauliflower florets or to package and store the cauliflower for sale in this way. Since this procedure is essentially a labour intensive and time-consuming manual operation, there is a need for a machine and a method capable of industrial application for carrying out this operation of the coring and floretting of cauliflowers.

My UK patent GB-B-2213045 describes one such machine, comprising a pair of cooperative corer cutters formed of confronting half-tubular members, means for driving the cutters into an inverted cauliflower, and means for relatively pivoting the cutters so as to separate the florets from the core of a cauliflower.

It is an object of the present invention to provide a machine which is considerably simpler than the machine described in the aforesaid patent, and which can therefore be more simply set up and maintained.

It is a further object of the invention to provide an apparatus for processing vegetables which has the flexibility to deal with different vegetables, e.g. cauliflowers, calabrese, cabbage, etc. This can be achieved either by making the cutting/trimming part of the apparatus exchangeable, or by providing the apparatus with a plurality of serially arranged stations, each having a different cutting/trimming mechanism, with provision for switching the different stations into and out of action, as required.

In accordance with the invention there is provided a method of cutting/trimming vegetables, especially of the Brassica family, comprising transporting the vegetables in an inverted state at predetermined spaced intervals through a work station on conveyor means, and causing cutting means to undergo movement towards the vegetables, characterised by causing cutting/trimming means to undergo a first reciprocating movement parallel to the direction of movement of the conveyor means and in the forward direction in synchronism with the forward movement of the vegetables thereon, and, during the forward part of said first movement, a second movement towards and away from the vegetables during which cutting/trimming is effected.

Preferably the method is characterised in that a plurality of work stations are provided at spaced intervals along the conveyor means, with a different cutting/trimming means at each work station, and in that the respective cutting/trimming means can be switched into and out of operation as required.

Also in accordance with the present invention there is provided apparatus for cutting/trimming vegetables, especially of the Brassica family, comprising conveyor means arranged to carry the vegetables in an inverted state at predetermined spaced intervals thereon, and cutting means arranged to undergo movement towards the inverted vegetables, characterised in that cutting/trimming means undergo a first reciprocating movement parallel to the direction of movement of the conveyor means and in the forward direction in synchronism with the forward movement of the vegetables thereon, and, during the forward part of the first movement, a second movement towards and away from the vegetables during which cutting/trimming is effected.

Preferably the cutting/trimming means comprises a pair of cooperative cutters movable jointly each at the same inclined angle towards the inverted vegetable and arranged to come into abutting engagement at the termination of the approach movement.

Preferably, the cutting/trimming means comprises a pair of confronting trowel-shaped members.

It has been found that, with this apparatus adapted for use with cauliflowers, separating the cores from the florets can be carried out in a one-step coring operating mechanically and successfully, and that this operation detaches all the florets from the cores, so that these two parts of the cauliflower can be separated readily from one another.

Preferably, the cutting/trimming means is adjustable towards and away from the conveyor means to vary the depth of cut.

Other preferred features of the apparatus of the invention are set out in the claims 4 to 14.

In order that the invention may be more fully understood, one presently preferred embodiment of apparatus in accordance with the invention, and a number of modifications, will now be described by way of example and with reference to the accompanying drawings, in which:
Fig. 1 is a schematic side view of an apparatus in accordance with the invention for coring cauliflowers, but with the cutting mechanism shown rotated through 90° about the vertical axis from its operating position, simply in order to show it more clearly;
Fig. 2 is a schematic illustration of the part of the apparatus adjacent to the cutters, showing additional components associated with the cutters to illustrate their mode of operation, the cutters again being shown displaced through 90°;
Fig. 3 is a side view of a slightly modified embodiment of apparatus for coring cauliflowers;
Fig. 4 is a front view of the apparatus of Fig. 3, with the front conveyor and wheel supports omitted;
Fig. 5 is a schematic illustration of an auger for use in coring Dutch cabbage;
Fig. 6 is a schematic illustration of a blade mechanism for slicing Dutch cabbage;
Fig. 7 is a schematic illustration of a double blade mechanism for slicing Dutch cabbage; and,
Fig. 8 is a schematic illustration of a butt trimmer for Dutch cabbage.

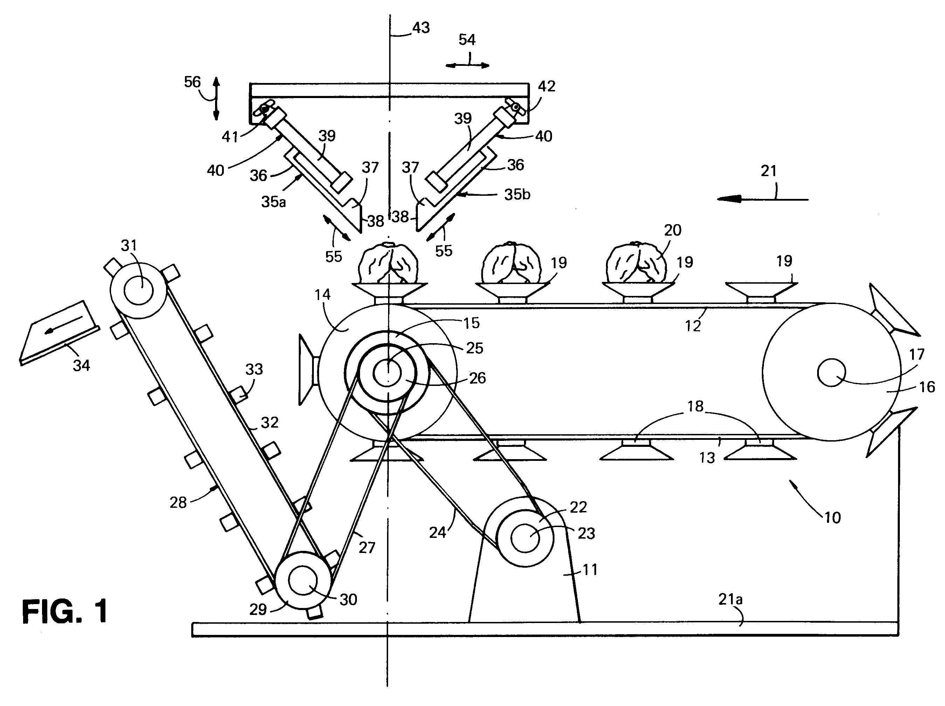

As shown in Fig. 1, the cauliflower coring machine comprises a conveyor which is indicated generally at 10, driven by a variable speed motor 11. The conveyor 10 comprises an endless chain or belt having horizontal upper and lower runs 12 and 13 respectively. The conveyor has a forward roller 14 rotatable on a shaft 15, and a rearward roller 16 rotatable on a rear shaft 17. The conveyor includes a plurality of horizontal transverse supports, shown end-on at 18 in Fig. 1, the ends of which run in low-friction bearers (not shown) which are attached to parts of a surrounding frame (not shown). The centre of each transverse support 18 carries an outwardly-facing bowl or dish 19, into each of which a cauliflower 20 is placed, such as by being mechanically fed into position. The horizontal arrow 21 indicates the direction of advance of the upper run 12 of the conveyor 10 and therefore of the bowls 19 and the cauliflowers 20 contained in them.

The cauliflower coring machine consists of a frame (not shown) on a floor support 21a on which the motor 11 is mounted. All the moving components of the machine preferably derive their motion from the motor 11, which is for example in the form of an electric motor. The motor 11 is connected by a pulley 22 on its output shaft 23 and a drive member, for example a chain 24, to a driven sprocket 25 on one end of the shaft 15 which is mounted horizontally across the machine frame.

By means of the chain 24 and a further pulley 26, which is attached to shaft 15 and in turn drives a chain 27, the motor 11 also drives a discharge conveyor 28. The chain 27 drives a pulley 29 attached to a shaft 30 which forms the lower support and drive for the lower, on-running end of the discharge conveyor 28, which is also supported at its off-running upper end by a further shaft 31.

The discharge conveyor 28 is inclined and preferably consists of a flexible endless belt 32, running around the shafts 30, 31 and having across its surface a plurality of transverse walls 33. As the off-running shaft 31 is disposed above the on-running shaft 30, the discharge conveyor is thus constructed as a simple form of elevator; material received on it, namely from the discharge end of the conveyor 10, is therefore raised to the off-running end adjacent to the upper shaft 31 and is then discharged via a chute 34.

As will be apparent from Fig. 1 of the drawings, the cauliflowers 20 are set in the bowls 19 in an inverted or base-upwards position. The conveyor 10 advances the cauliflowers from the rearward end of the conveyor towards the end which is adjacent to the discharge conveyor 28. Towards the forward end of the conveyor 10 is a coring station which is equipped with at least one pair of core cutters 35a, 35b. In practice, the core cutters are positioned turned through 90° about the vertical axis as compared to how they are shown in Fig. 1. In other words, the cutters move into the cauliflower from each side of the conveyor. Each of the core cutters has a stem portion 36 and a foot portion 37 which is preferably trowel-shaped and has a curved edge 38 which is in confronting relationship to the corresponding curved edge on the other of the two cutters. It is these facing edges 38 which perform the cutting action on the cores of the cauliflowers.

The stem portions 36 of the core cutters 35a, 35b are fixedly secured to respective cylinders 39 of a pair of pneumatic piston-cylinder units 40. The upper end of each piston-cylinder unit 40 is provided with a lug 41 which can be secured in position relative to an arcuate slot 42 by means of a suitable bolt fastening. Thus, each of the piston-cylinder units 40 can be adjusted as to its position, so as to ensure that the two units are set at the same angle of inclination relative to a central vertical plane 43. The units 40 and thus the cutters are preferably set at an angle of approximately 45° to the vertical, although this angle may be altered to suit different types of vegetable or different types of cutter. The arcuate slots 42 are formed in bearers 44 beneath a horizontal arm 45 of a supporting framework. The horizontal arm 45 is supported upon a vertical column 46 which extends upwards from a horizontal platform 47 which is equipped with wheels 48 arranged to run on rails 49 which are in alignment with the main conveyor 10. The framework 45, 46, 47, 48 which essentially constitutes a trolley is movable backwards and forwards above the conveyor 10 on the rails 49 in a controlled manner. A belt or chain 50 extends around a shaft 51 at the base of the column 46 and around an eccentric pin 52 on a roller 53. This roller 53 is driven directly or indirectly from the electric motor 11. By means of this eccentric rotary drive the framework which carries the core cutters 35a, 35b is driven reciprocally above the main conveyor and above the cauliflowers carried thereby. This reciprocating movement is indicated by the arrow 54 (Fig.1).

Actuation of the piston-cylinder units 40 causes the core cutters 35a, 35b to be moved parallel to the respective longitudinal axes of the units, in the directions indicated by the arrows 55. The core cutters are movable from a retracted position, as shown in Fig. 1, to a closed position in which the cutting edges 38 are in abutting engagement.

The horizontal arm 45 of the supporting framework for the core cutters is mounted so that it can be raised or lowered vertically, for example through a distance of up to about 100 mm. This is indicated by the arrow 56. Such adjustment movement effects corresponding vertical movement of the core cutters themselves, for a purpose which will become apparent hereinafter.

In operation of the machine, cauliflowers are loaded in an inverted state onto the series of bowls 19, either by hand or automatically from a store. The core cutters 35a, 35b and the associated supporting mechanism are movable reciprocally on the rails 49. The speed of movement of the cutters and supporting mechanism is synchronised with the movement of the conveyor 10 so that when the core cutters are moving forwards, i.e. in the direction towards the left in Fig. 1, they are moving at the same speed as the upper run 12 of the conveyor 10. The core cutters and the associated supporting mechanism have a length of stroke which is dependent upon the construction of the machine and upon the speeds of movement involved. It must be sufficiently long for the cutters to perform the cutting operation to be described hereinafter. In one practical embodiment the stroke is approximately 150 mm.

At a predetermined point in the path of movement of the core cutters 35a, 35b from their most rearward tracking position in relation to the conveyor 10 to their most forward tracking position, the piston-cylinder units 40 are actuated, thereby causing the cutters to be moved in the direction of the arrows 55 downwards towards the base of an associated cauliflower. The cutters are moved downwards and into the cauliflower, around its core, until the confronting edges 38 of the cutters are in contact. This puts a cut around the core and severs the core from the florets. The cutters 35a, 35b are then retracted by appropriate pressurisation of the piston-cylinder units 40, until they adopt the position substantially as shown in Fig. 1. Throughout this period the core cutters have been moving to the left as shown in Fig. 1 at the same speed as the cauliflowers beneath the cutters. The cauliflower, with the core still in situ, continues along the upper run of the conveyor 10 until it is tipped from its bowl 19 on to the discharge conveyor 28 where it is gathered up by the walls 33 and carried upwards to be discharged into the chute 34. Although the core is fully cut and thus separated from the flower, the core is left in situ until the subsequent floret hand-trimming takes place, at which time it is discarded.

As mentioned above, the suspension framework for the cutters is vertically adjustable, as indicated by arrow 56. By this means the amount of core which is cut out of a certain size of cauliflower can be adjusted to suit the size of the vegetable and the size of its core. In other words, by lowering the core cutters towards the upper run 12 of the conveyor, the larger will be the portion of core cut from the cauliflower. On the contrary, by raising the core cutters, a smaller volume of core material will be cut by the incision.

With bowls 19 set approximately 300 mm apart on the conveyor 10, the complete system is capable of operating with a throughput of approximately 75 cauliflowers per minute. It will be appreciated that in order to effect a satisfactory cutting of the cauliflower core from the florets it is necessary to synchronise the movement of the core cutters 35a, 35b with the movement of the conveyor 10 and of the cauliflowers carried by it. These movements must also be synchronised with the operating cycle for the piston-cylinder units 40 so that the cutters are moved into and out of the cauliflowers at the correct points in the movement of the cauliflowers along their path.

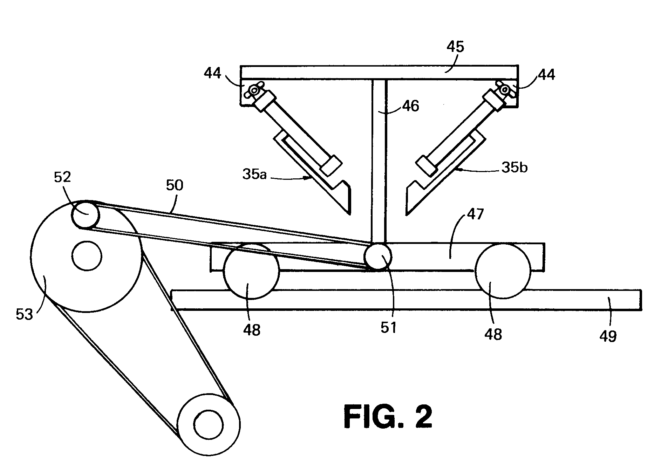

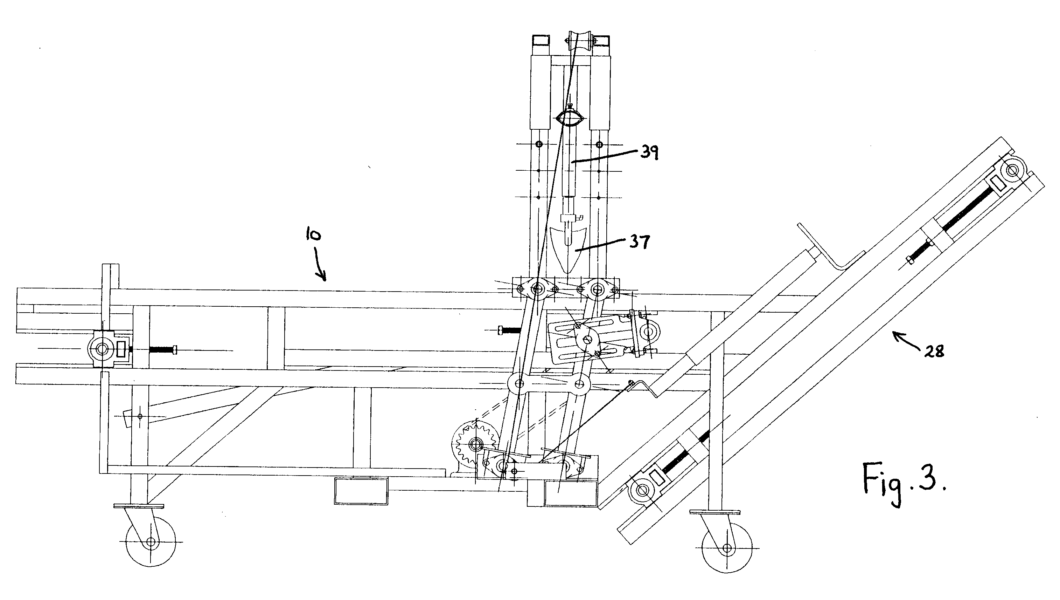

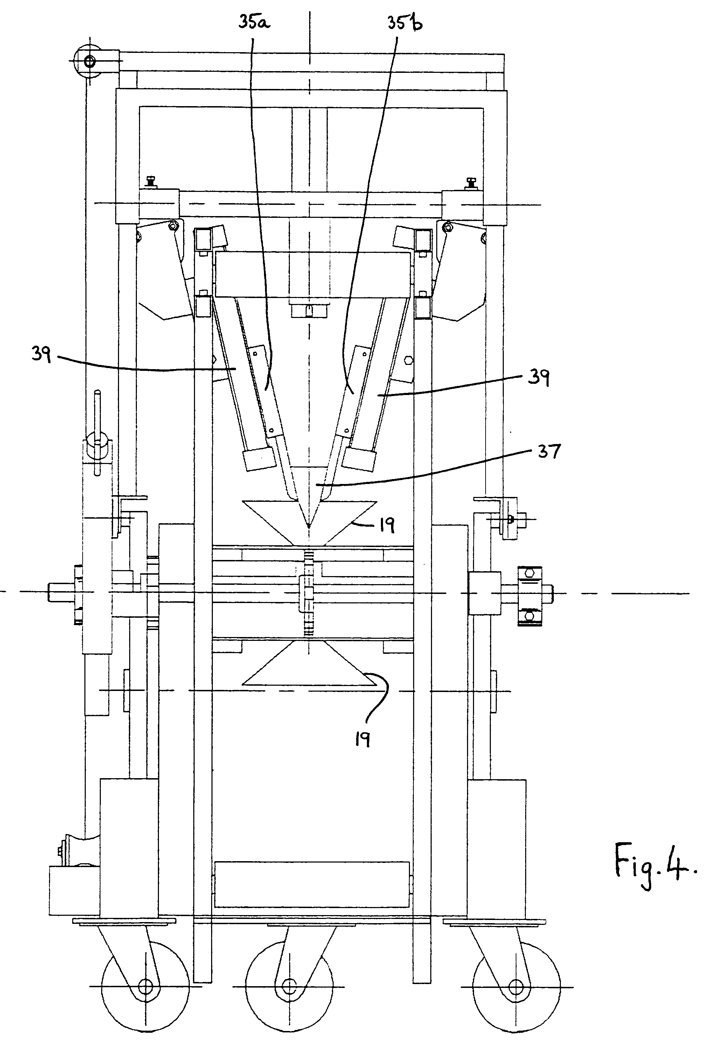

Figs. 3 and 4 show details of a slightly modified embodiment of cauliflower coring machine. Also, these drawings show in more detail the means by which the cutting mechanism is tracked back and forth relative to the conveyor 10. In Fig. 3 the bowls 19 into which the cauliflowers are placed are omitted. In the front view shown in Fig. 4 the front conveyor 28 is omitted for clarity. It is more easily visible from Figs. 3 and 4 how the cutters 35a, 35b move towards, into and away from the cauliflowers, from each side of the conveyor. In Fig. 4 the cutters are shown in the lowermost position where the confronting edges 38 are in face to face engagement. As shown in Fig. 4, the cutters are set in a more upright attitude than in Figs. 1 and 2. This will vary the configuration of the incision made into the cauliflower. Just as in the embodiment shown in Figs. 1 and 2, the cutting mechanism which incorporates the core cutters 35a and 35b tracks back and forth relative to the conveyor 10 in order to synchronise its forward movement with the forward movement of the cauliflowers on the conveyor.

Although in the embodiments described above the conveyor 10 is described as a linear conveyor having an upper run and a lower run, the invention could also be used with other conveyors, notably with a conveyor operating as a flat conveyor operating with the bowls 19 moving for example around a generally elliptical path. With such an arrangement the cauliflowers are loaded at one side of the conveyor and are treated by the cutting mechanism at the other side of the conveyor.

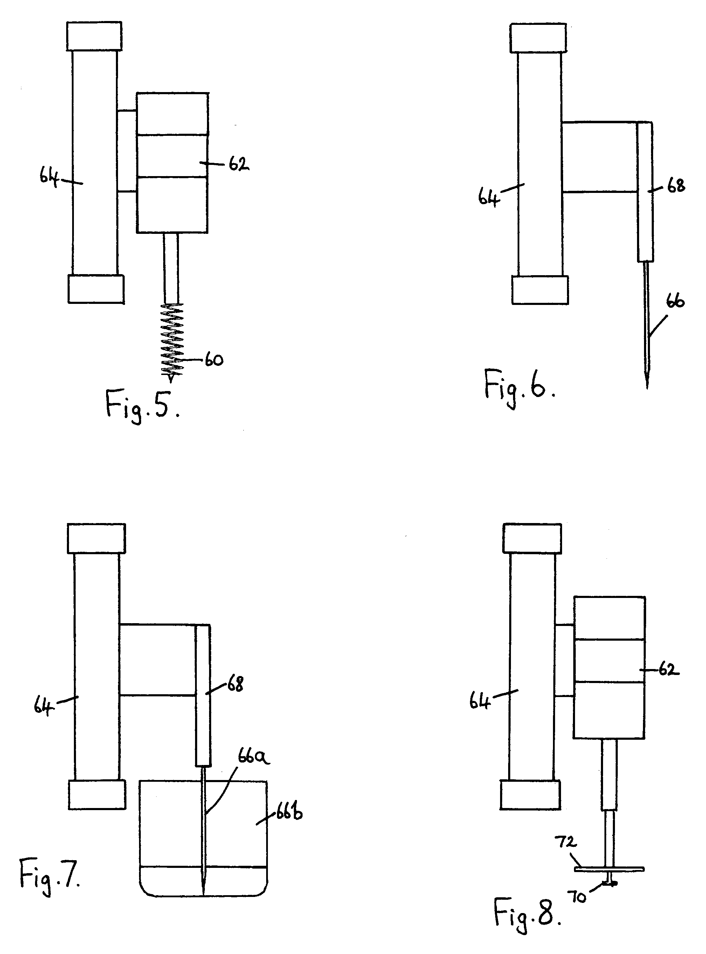

Although the invention has been described above in relation to the coring of cauliflowers, it is to be understood that the apparatus and method of the invention can also be applied to other processing treatments for cauliflowers and other vegetables. Figs. 5 to 8 show four alternative cutting/trimming mechanisms which can be used at a suitable work station adjacent to a conveyor. Fig. 5 shows an auger 60 which is driven by a motor 62 which is coupled to a pneumatic cylinder unit 64. This auger mechanism is intended to core Dutch cabbage, a vegetable which has a very hard stalk and very tightly compacted leaves around the stalk, making the entry of trowel-shaped cutters into the vegetable difficult. The auger 60 is designed to drill to a depth of about 150 mm into the cabbage to remove the core. Although the auger 60 shown in Fig. 5 is cylindrical in shape, a tapering auger is generally to be preferred. Just as in the case of the cutting mechanism shown in Figs. 1 to 4, the auger and its driving means will track back and forth relative to the conveyor 10 so that the drilling action takes place "on the fly" as the cabbage and auger move forward in synchronism.

Certain cabbage, particularly Dutch cabbage, are often of a large size and it is necessary to divide the vegetable into pieces for subsequent processing and packaging. Fig. 6 shows a slicing blade 66 projecting downwards from a holder 68, again driven for reciprocating vertical movement by a pneumatic cylinder 64. The blade 66 is designed to slice a cabbage into two portions. Fig. 7 shows an equivalent arrangement where two blades 66a and 66b are set at right-angles to each other, so as to quarter the cabbage. When using the blades 66, 66a, 66b it is necessary that the bowls 19 have slots therein to accommodate the blades.

Fig. 8 shows a mechanism for trimming the butts off cabbage, particularly Dutch cabbage. It is desirable with such cabbage to have a trimmed end to the stalk so that it lies flush with the outermost leaves of the vegetable. Here a sensor 70 is arranged to travel downwards on a light piston into contact with the butt of the cabbage. It then feeds information back to the control unit (not shown) which causes a rotary cutter 72 to come down to a predetermined height above the sensor, thereby to trim a predetermined amount, for example approximately 3 mm, from the cabbage butt.

These alternative cutting/trimming mechanisms can be used in a number of different ways. For example, they can be regarded as individual interchangeable units which can be fitted into a single cutting/trimming station as and when required. In other words, the core cutters 35a, 35b of the embodiments shown in Fig. 1 to 4 would be removed from the work station and the alternative cutting/trimming mechanism would be set into place as an exchange unit. Alternatively, the conveyor 10 can be set up with a plurality of work stations arranged at spaced intervals along its length, with each work station having a different cutting/trimming mechanism, such as of the type shown in Figs. 5 to 8. Then, by the use of suitable control switch means, one switches the individual cutting/trimming units into and out of action as required. In this way, one can have for example six work stations arranged in series at spaced intervals with these being brought into action only as and when required for the particular vegetables and particular processes to be carried out on them. It is emphasised that in each case the cutting/trimming mechanism will track reciprocally relative to the conveyor 10 in order to synchronise its forward movement with the forward movement of the vegetables on the conveyor.

## Claims

1. A method of cutting/trimming vegetables, especially of the Brassica family, comprising transporting the vegetables (20) in an inverted state at predetermined spaced intervals through a work station on conveyor means (10), and causing cutting means to undergo movement towards the vegetables, characterised by causing cutting/trimming means (35a, 35b; 60; 66; 66a, 66b; 72) to undergo a first reciprocating movement (54) parallel to the direction of movement of the conveyor means (10) and in the forward direction in synchronism with the forward movement of the vegetables thereon, and, during the forward part of said first movement, a second movement towards and away from the vegetables during which cutting/trimming is effected.

2. A method as claimed in claim 1, characterised in that a plurality of work stations are provided at spaced intervals along the conveyor means (10), with a different cutting/trimming means at each work station, and in that the respective cutting/trimming means can be switched into and out of operation as required.

3. Apparatus for cutting/trimming vegetables, especially of the Brassica family, comprising conveyor means (10) arranged to carry the vegetables (20) in an inverted state at predetermined spaced intervals thereon, and cutting means arranged to undergo movement towards the inverted vegetables (20), characterised in that cutting/trimming means (35a, 35b; 60; 66; 66a, 66b; 72) undergo a first reciprocating movement (54) parallel to the direction of movement of the conveyor means (10) and in the forward direction in synchronism with the forward movement of the vegetables thereon, and, during the forward part of the first movement, a second movement towards and away from the vegetables during which cutting/trimming is effected.

4. Apparatus as claimed in claim 3, characterised in that the said second movement is a linear movement down towards the vegetables and up away from the vegetables.

5. Apparatus as claimed in claim 3, characterised in that the cutting/trimming means comprises a plurality of cutters and the second movement is a linear reciprocating movement of each cutter towards, into and away from the vegetables.

6. Apparatus as claimed in claim 3, 4 or 5, characterised in that the cutting/trimming means comprises a pair of cooperative cutters (35a, 35b) movable jointly each at the same inclined angle towards the inverted vegetable and arranged to come into abutting engagement at the termination of the approach movement.

7. Apparatus as claimed in any of claims 3 to 6, characterised in that the cutting/trimming means comprises a pair of confronting trowel-shaped members (37, 38).

8. Apparatus as claimed in any of claims 3 to 7, characterised in that the cutting/trimming means is actuated for the second movement by pneumatic piston-cylinder units (40) which are adjustable to vary the angle of approach.

9. Apparatus as claimed in claim 8, characterised in that the piston-cylinder units and the cutting/trimming means are arranged at an angle of the order of 45° to the vertical.

10. Apparatus as claimed in any of claims 3 to 9, characterised in that the cutting/trimming means is adjustable towards and away from the conveyor means (10) to vary the depth of cut.

11. Apparatus as claimed in any of claims 3 to 10, for coring cauliflowers and similar vegetables, characterised in that at the termination of the movement of the cutting means (35a, 35b) into an inverted cauliflower the cutting means has completed a cut severing the core from the florets.

12. Apparatus as claimed in claim 11, characterised in that the cauliflowers with severed cores in situ are deposited from the conveyor means (10) on to further discharge conveyor means (28, 34).

13. Apparatus as claimed in any of claims 3 to 12, characterised in that the cutting/trimming means is mounted on a rail-borne trolley to undergo the first reciprocating movement.

14. Apparatus as claimed in any of claims 3 to 13, characterised in that a plurality of work stations are provided at spaced intervals along the conveyor means (10), with a different cutting/trimming means (35a, 35b; 60; 66; 66a, 66b; 72) at each work station, with means for switching the respective cutting/trimming means into and out of operation.
